# EUROPEAN PATENT SPECIFICATION

(11) **EP 2 239 241 B1**
(45) Date of publication and mention of the grant of the patent: **25.06.2014**
(21) Application number: 08874351.3
(22) Date of filing: 24.10.2008
(51) Int. Cl.: C04B 20/10, C04B 28/02

(54) **A SELF REPAIRING CONCRETE CONTAINING MICROCAPSULES OF POLYUREA RESIN AND PRODUCING METHOD THEREOF**
SELBSTREPARIERENDER BETON MIT POLYHARNSTOFFHARZMIKROKAPSELN UND HERSTELLUNGSVERFAHREN DAFÜR
BÉTON AUTORÉPARABLE EMPRISONNANT DES MICROCAPSULES DE MACROMOLÉCULES RÉSINE DE CARBAMIDE ET SON PROCÉDÉ DE FABRICATION

(30) Priority: 20.05.2008 CN 200810067313
(43) Date of publication of application: 13.10.2010
(73) Proprietor: Shenzhen University, Guangdong 518060 (CN); Xing, Feng, Guangdong 518060 (CN); Ni, Zhuo, Guangdong 518060 (CN)
(72) Inventor: XING, Feng, Guangdong 518060 (CN); NI, Zuo, Guangdong 518060 (CN)
(74) Representative: Vossius & Partner
(86) International application number: PCT/CN2008/072833
(87) International publication number: WO 2009/140836

(56) References cited:
- WO-A1-2006/018130
- CN-A- 1 736 575
- CN-A- 1 903 775
- CN-A- 101 289 298
- DE-A1- 2 557 407
- JP-A- 10 194 801
- JP-A- 2006 321 685
- US-A1- 2006 042 504

## Description

The present invention relates to a self-repairing concrete having carbamide resin polymer micro-capsules and a method for fabricating such concrete.

### GENERAL BACKGROUND

As a representative of the traditional building materials, concrete has its inherent advantages of compressive strength, high durability and low cost, therefore being widely used in industrial and civil buildings, bridges, road works, underground works, water conservancy and hydropower projects, nuclear power plants, ports and ocean engineering structures. Currently, the concrete is used in the large-span structures, high-rise structures, mega-structure and the special structure as the most widely applied material that has more than 100 years of history. In the foreseeable future, the concrete is still an indispensable building material in the country's modernization construction. In-service concrete structures due to the use of long-term process and under the influence of the surrounding complex environment, will inevitably produce micro-cracking and local damage. Those defects usually would reduce the life of the structure, cause re-structure, even threaten safety. Therefore, the structural repair of cracks in concrete is a long-troubled technical problem to civil engineers. Researches on raw materials, mixing ratio, additives, manufacturing processes, casting processes do not fundamentally change the performance of weaknesses of the concrete. Therefore, to repair the crack of the concrete in service timely and effectively has become a major concern of scientists and engineers. Due to damage caused by macro such as earthquakes, wind loads, shock, you can visually detect and fix it manually, using traditional methods (program repair and post-restoration) on the crack repair. In the actual structure of concrete works, there are many small cracks, such as micro-cracking of base body and so on, and these micro-scale damage may be undetectable due to the limitations of detection technology. Therefore, it becomes very difficult to repair these undetectable cracks and damage, if not impossible. If the cracks or damage can not be timely and effectively restored, the structure will not only affect the normal use of the performance and shorten the life, but also macro-cracks may be triggered and lead to structural brittle fracture, resulting in a serious catastrophic accidents. There is an urgent need to adopt a certain technology or method that can initiatively and automatically repair and restore the cracks and damage, or even can increase the strength of concrete materials in order to achieve a purpose of extending the service life of concrete structures. Conventional concrete and method for fabricating concrete cannot make the solution of micro-cracks self-diagnose and self-repair.

The self-repair of the concrete is conducted by adding special components (such like shape memory alloy) to form intelligent self-repair system that can be automatically triggered to fix the damage or cracks of the concrete material.

Currently, researches about self-repairing concrete structures are concentrated in the hollow fiber restoration techniques. Although it is still in the laboratory stage, the hollow fiber capsules proof the function of the self-repairing concrete. However, the construction process of concrete causes vibrations, etc., which disturb the arrangement of hollow fiber capsule design, and even lead to rupture of the glass wall material, namely the premature loss of restorative, which is unable to attain the purpose of repairing concrete and affect the feasibility of self-repairing process of the concrete and the repeatability of self-repairing capacity of the concrete. During a process of oxidation and use, micro-cracks and cracks in concrete structures appeared in large numbers randomly. Self-repairing technique requires the repair capsules evenly distributed in the concrete structure. Because the hollow fiber material has restrictions due to the brittle characteristic, the hollow fiber capsules can not ensure micro-capsule material in concrete in the even distribution, so that the fiber capsule of the micro-cracks in self-repairing process of the concrete structure can only adopt special concrete materials and special technique. These difficulties limit the hollow fiber capsules in repair cracks in the concrete structure effectively. Surface properties, wall material strength, geometry parameters and content of hollow fiber capsule have significant impacts on the repair of concrete results. Fibrous capsule wall material is smooth and in lower bond strength of concrete that make concrete hard to form an effective phase interface. Hollow fiber capsule has larger size, sometimes up to millimeters in diameter and can be considered that fixed agents are introduced as well as defects, inevitably, in the concrete structure, which will reduce the concrete's own strength and self-repairing efficiency. Hollow fiber capsule wall material a large strength of glass, thus stress generated by the micro-cracks of the concrete may be difficult to provide enough energy to the make hollow fiber capsule rupture, and this technology may only fix large cracks while in critical factor of damages of the concrete structure, micro-crack, may be very limited for the micro-crack to be self-repairing. This shows that the method still has many problems to be solved in engineering applications, including durability of the fibrous capsule, timeliness of repairing, interface compatibility, reliability, and feasibility of restoration and other issues in engineering applications. It is obvious that early repair of micro-cracks is significant and essential for the durability of concrete structures, so that the use of hollow fiber micro-capsule technology does not fit micro-cracks repairing for reasons including the above-mentioned limitations.

JP 10-194801 A relates to a concrete having a crack self-repairingfunction and to an aggregate to be blended into the concrete. The aggregate is obtained by impregnating an aggregate main body consisting of a porous material with a repairing liquid for plugging the crack by releasing to the crack generated in the concrete to encapsulate the repairing liquid. The concrete blended with the aggregate is constituted so as to repair the crack naturally with oneself by releasing the repairing liquid from the aggregate when the crack is caused.

What is needed, therefore, is a self-repairing concrete having carbamide resin polymer micro-capsules. What is also needed is a method for fabricating such concrete.

### SUMMARY

It is an object of the present invention to provide a self-repairing concrete having carbamide resin polymer micro-capsules that can effectively achieve self-repairing of the micro cracks of the concrete.

The present invention relates to a self-repairing concrete comprising: a mixture of concrete, carbamide resin polymer micro-capsules and water, wherein the mass ratio of said concrete, micro-capsules and water is 100 : I - 15 : 15 - 50, wherein the micro-capsules are ball-shaped with a diameter of 10 - 500 microns and comprise a capsule wall and a capsule core, wherein
(i) the capsule wall is made from carbamide resin polymer and has a thickness of 1 - 10 microns, and
(ii) the capsule core is an adhesive material, wherein the adhesive is a single component adhesive selected from the group consisting of single-component polyurethane adhesives, silicone anaerobic adhesives, acrylic adhesives, and neoprene adhesives or is a multi-component epoxy adhesive;
wherein the mass ratio of the polymer material of the capsule wall and the adhesive material of the capsule cores of the micro-capsules is 100 : 40 - 80.

According to an exemplary embodiment of the present invention, the multi-component epoxy adhesive consists of one or more of bisphenol A type epoxy resin, bisphenol F type epoxy resin, bisphenol S type epoxy resin, resorcinol-type epoxy resin, silicone modified bisphenol A type epoxy resin or organic titanium modified bisphenol A type epoxy resin.

According to an exemplary embodiment of the present invention, the micro-capsules are pre-mixed with 0.1-0.5% hydrophilic surface active agent and are evenly distributed in the concrete, wherein the hydrophilic surface active agent comprises one or more of alkylbenzene sulfonate, polyoxyethylene, poly-or multi-hydroxy compounds, and glycidyl compound.

According to an exemplary embodiment of the present invention, the micro-capsules comprise 8-30% diluent, the diluent comprising epoxy that is capable of improving liquidity of the epoxy resin and performing reaction with the epoxy resin and solidifying agent.

The diluent can improve the liquidity, and the solidifying agent can obtain a good splicing intensity.

According to an exemplary embodiment of the present invention, the solidifying agent is a low-temperature reactive type, comprising one or more of straight-chain aliphatic polyamine, polyamide, aliphatic polyamines, aromatic amines, modified polyamine, poly-mercaptan, urea derivatives, imidazole derivatives and organic farmers derivatives, wherein the mass ratio of the solidifying agent and the epoxy resin wherein the mass ratio of is 12-35%.

It is another object of the present invention to provide a method for fabricating concrete, capable of self-repairing of the micro-cracks, having carbamide resin polymer micro-capsules that can effectively achieve self-repairing of the micro-cracks of the concrete to solve the problem that conventional techniques cannot provide self diagnosis and self repairing. By controlling surface properties, the micro-capsules and concrete can form perfect interface

Another embodiment of the present invention is a method for fabricating a self-repairing concrete comprising the steps of:
(1) Weighing a sufficient dose of water, adding in a proper portion of carbamide resin polymer micro-capsules, then stirring until said micro-capsules are fully dispersed in said water, wherein the mirco-capsules are ball-shaped with a diameter of 10 - 500 microns and comprise a capsule wall and a capsule core, wherein
   (i) the capsule wall is made from carbamide resin polymer and has a thickness of 1 - 10 microns, and
   (ii) the capsule core is an adhesive material, wherein the adhesive is a single component adhesive selected from the group consisting of single-component polyurethane adhesives, silicone anaerobic adhesives, acrylic adhesives, or neoprene adhesives or is a multi-component epoxy adhesive;
   wherein the mass ratio of the polymer material of the capsule wall and the adhesive material of the capsule cores of the micro-capsules is 100 : 40 - 80;
(2) Pouring the above mixture into a mixing container, adding a corresponding dose of cement to said mixture;
(3) Slower stirring the mixture with cement and then faster stirringto form a concrete slurry;
(4) Gradually adding said concrete slurry into a mixing container, each time at 1/3 of total dose, vibrating and removing bubbles until all said concrete slurry has been added to fill in said mixing container.

It is another object of the present invention to provide a method for fabricating concrete, capable of self-repairing of the micro-cracks, having carbamide resin polymer micro-capsules that can effectively achieve self-repairing of the micro-cracks of the concrete to solve the problem that conventional techniques cannot self diagnose and self repair through optimized components portions and technique conditions to fabricate precisely controlled polymer micro-capsules with self-repairing structures and inner surface and outer surface to guarantee representativeness of samples such that better overall assessments of self-repairing concrete structures can be obtained.

Another embodiment of the present invention is a method for fabricating a self-repairing concrete comprising the steps of:
(1) Weighing a sufficient dose of water, adding a proper portion of carbamide resin polymer micro-capsules into said water, then stirring until said micro-capsules are fully dispersed in said water, wherein the micro-capsules are ball-shaped with a diameter of 10 - 500 microns and comprise a capsule wall and a capsule core,
   wherein
   (i) the capsule wall is made from carbamide resin polymer and has a thickness of 1 - 10 microns, and
   (ii) the capsule core is an adhesive material, wherein the adhesive is a single component adhesive selected from the group consisting of single-component polyurethane adhesives, silicone anaerobic adhesives, acrylic adhesives, or neoprene adhesives or is a multi-component epoxy adhesive;
   wherein the mass ratio of the polymer material of the capsule wall and the adhesive material of the capsule cores of the micro-capsules is 100 : 40 - 80;
(2) Pouring the above mixture into a mixing container, adding in corresponding dose of cement into said mixture;
(3) Slower stirring said mixture with cement, and then faster stirring to form a concrete mixture;
(4) Vibrating the concrete mixture and then gradually or step by step irrigating work pieces in molds;
(5) Putting the above mixture aside for 1-2 hours, scraping the concrete slurry overflowed from the molds, then placing aside for 21-26 hours;
(6) Removing said work-pieces from the molds and then transferring the work-pieces to a conservation container for 25-31 days to form said self-repairing concrete.

The present invention provides a self-repairing concrete having carbamide resin polymer micro-capsules and a method for fabricating concrete, capable of self-repairing of the micro-cracks, having carbamide resin polymer micro-capsules. By controlling surface properties, the micro-capsules and concrete can form perfect interface. Through optimized components portions and technique conditions, a self-repairing concrete having carbamide resin polymer micro-capsules can be fabricated.

The present invention uses the micro-capsules of fine dispersibility and stability, and the micro-capsules are evenly dispersed in matrix material of concrete. The micro-capsules will not break during process of mixing and maintaining. In the course of cracking, the micro-capsules release adhesive agents to repair the concrete.

The present invention provides epoxy resin adhesive agents having components as: epoxy resins: 100, diluents: 10-30, solidifying agents: 15-35. The diluents are added into the epoxy resin to decrease a viscosity and increase liquidity. The modified epoxy resins are packaged with macromolecules. The solidifying agents can be used directly or after having been micro-capsuled.

The present invention also provides methods for fabricating micro-capsules used in self-repairing concrete. Using chemical methods to fabricate the micro-capsules, a capsule core including restoration agents and epoxy resins are wrapped up thereby forming sealed capsules. The advantage of it is that after the micro-capsules are formed, the capsule core is isolated from the external environment and avoids influences of temperature, oxygen and ultraviolet radiation of external environment. Under proper conditions, the capsule core can be released through cracks. The micro-capsules must be of proper mechanical strength and heat resistance, and the active capsule core should be of low viscosity, and small expansion coefficient and high intensity of adhesion after reactions, such that the micro-capsules can be guaranteed to keep intact in the composite molding process, and release the capsule core under stress of micro cracks or heat.

Using carbamide resin polymers to package the epoxy resins: in constant temperature water bath, 20.0g epoxy resins are added into 18.0g cyclohexanes (organic phase) having 4.35g toluene-2,4 - diisocyanate (TDI) and mixed into the organic solution of uniformity. The organic solution is added into 100ml aqueous phase having 0.5g emulsifier containing sodium alginate (SA) to be fully emulsified with a stirring rate at 500r/min for 5min, forming an O/W emulsion. Slowly adding 100ml water having alcohols, and increasing the temperature to 70 degrees and keep stirring for 2-3h. The serosity formed therein is washed by 30% ethanol to remove unreacted TDI and butyl stearate remained at the surfaces. After drying for 24 hours at room temperature, micro-capsules can be obtained.

The present invention also provides carbamide resin polymer materials of micro-capsules having fine dispersibility with components: polymer micro-capsules: 100, surfactants: 0.5-5.

The surfactants are added into polymer micro-capsules, mixture devices are used to perform stirring operation. In the process of self-repairing concrete materials, the micro-capsules do not united but are evenly distributed in the concrete structure. In addition, the micro-capsules can improve a liquidity of the slurry of the concrete.

The present invention also provides a self-repairing concrete including carbamide resin polymer micro-capsules, wherein a mass ratio of the self-repairing concrete is: concrete, micro-capsules and water = 100:1-15:15 -50.

After concrete technique and cracks experiments, the self-repairing concrete is obtained. In the self-repairing concrete materials, the crack stress makes the micro-capsules rupture, and the capsule core is released to crack surfaces due to a crack capillary siphon effect and polymerization reactions are generated when contacting solidifying agents thereby forming polymer of sufficient strength to repair the cracks in order to obtain the purpose of self-repairing. Compared with an initial state and undermined state of the material, mechanical properties have significant recovery, especially the bending strength.

The present invention provides a method for fabricating concrete materials with self-repairing function. For the concrete with organic microcapsules, by adopting the following process self-repairing concrete materials with uniform dispersed and stable microcapsules can be produced, and the materials are not smashed in the mixing and maintaining process.
(1) Weighing a sufficient dose of water, adding a proper portion of carbamide resin polymer micro-capsules into said water, then stirring until said micro-capsules are fully dispersed in said water, wherein the micro-capsules are ball-shaped with a diameter of 10 - 500 microns and comprise a capsule wall and a capsule core, wherein
   (i) the capsule wall is made from carbamide resin polymer and has a thickness of 1- 10 microns, and
   (ii) the capsule core is an adhesive material, wherein the adhesive is a single component adhesive selected from the group consisting of single-component polyurethane adhesives, silicone anaerobic adhesives, acrylic adhesives, or neoprene adhesives or is a multi-component epoxy adhesive;
   wherein the mass ratio of the polymer material of the capsule wall and the adhesive material of the capsule cores of the micro-capsules is 100 : 40 - 80;
(2) Pouring the above mixture into a mixing container, adding in corresponding dose of cement into said mixture;
(3) Stirring said mixture with cement;
(4) Irrigating work-pieces after vibrating the concrete mixture;
(5) Putting the above mixture aside for 1 hour, scraping the concrete slurry overflowed from the molds, then placing aside for 24 hours;
(6) Removing said work-pieces from the molds and then transferring the work-pieces to a conservation container for 28 days.

In step (3) of the present invention of method for fabricating concrete materials using organic microcapsules, stirring includes first slow stirring (100-300rpm) and then rapid stirring (700-1000rpm).

In step (4) of the present invention of fabricating concrete materials using organic microcapsules, irrigating includes gradually adding concrete slurry, vibrating and removing bubbles until all of concrete slurry has been added to fill in the mixing container.

In step (4) of the present invention of fabricating concrete materials using organic microcapsules, irrigating further includes adding concrete slurry for 3 times, each time at 1/3 of total dose until all of concrete slurry has been added to fill in the mixing container.

The beneficial effects of the present invention are that after pre-damage of 8MPa and solidifying process the concrete materials having microcapsules compared to normal concrete materials have same or improved rupture strength. The micro-capsules release epoxy resins in the damage process, and chemical reactions with solidifying agents are generated in the micro cracks, and the damaged structures are repaired. Therefore, the present invention using micro-capsules can produce concrete materials with self-repairing and self-diagnosis to protect micro-cracks to expand and maintain the mechanical structures, with great economic value and environmental value.

Other novel features and advantages will become more apparent from the following detailed description.

### DETAILED DESCRIPTION OF PREFERRED EMBODIMENTS

Embodiment 1 (Synthesis Example): Diluent is adopted to improve a liquidity and an adhesive performance of an epoxy resin and a repair efficiency of self-repairing of a concrete of composite materials is increased. 20% 17 alkyl imidazole solidifying agent is added to the epoxy adhesive E-51; then 20% N-butyl glycidyl ether (BGE) is added, the viscosity is decreased from 8200mPa·s to 200mPa·s and the liquidity of the epoxy adhesive is improved, helping the capillary siphon effect occur; a tensile strength change is from 14.0MPa up to 17.6MPa, modulus from 223.3MPa to 334.0MPa, proving that the BGE help improve the mechanical performance of the epoxy resin. Analysis of FTIR shows that the diluent involves a cross-reaction of the epoxy resin and the solidifying agent.

Embodiment 2 (Synthesis Example): With carbamide resin polymer as the cyst wall, capsule core material such as the repair agent and epoxy resin are wrapped to form a sealed cyst membrane, which are used for fabricating micro-capsules of self-repairing concrete. 10 grams of carbamide are dissolved in 20.0 grams of 37% formaldehyde, and the pH value is adjusted to 8.5 by triethanolamine. In the mixing state and at 70°C constant temperature conditions, with one hour of reaction, prepolymer is obtained. 80-160 ml distilled water are added into 14.0 grams of epoxy resin of embodiment 1, with 20 minutes of violent stirring, W/O emulsion with high stability is obtained. Within two hours period, the pH value is adjusted to 4-5 with 2% sulphuric acid. Under conditions of 300-1200 rpm mixing speed and 50°C -80°C reaction temperature, about 2-3 hours reaction are undertaken. The product after cooled, washed with distilled water, and dried, white micro-capsules material are obtained. The micro-capsule has ball shape, with an average diameter of 120 microns and a capsule wall thickness of 3.5 microns.

Embodiment 3 (Synthesis Example): Surface active agent is adopted to help improve the liquidity and dispersity of polymer material micro-capsules used in fabricating self repairing concrete. 1.5 grams of dodecyl benzene sulphonic acid are added to 100 grams of the epoxy resin material having polymer micro-capsules, after 30 minutes of stirring, powdery substance with good liquidity and dispersity is obtained.

Embodiment 4: Carbamide resin polymer micro-capsules material is used to prepare sample of concrete having self-repairing function. 38.0 grams water is added with 2.0 grams carbamide resin polymer micro-capsules, stirring until fully dispersed. The water is poured into a mixing container and 100 grams cement are added therein. Stirring, vibrating, and work piece irrigating are conducted. After one hour of being put aside, the mold is formed. After mold overflow of concrete slurry being scraped, the mold is put aside for 24 hours. Then after the mold has been removed the sample is transferred into the conservation container for 28 days.

Testing of a strength of flexure and analysis of a pattern of fracture. During the process of fracture, the organic micro-capsules are destructed by stress, and a small portion thereof are separated at interface of the organic micro-capsules and the concrete. Organic micro-capsules and concrete can form a good interface. By using concrete having organic micro-capsules material, an original state compared to a destructed state, the strength of flexure is changed little or increased by a little, and the mechanic performance has a great restoration. This proves that the organic micro-capsule structure has the function of repairing for the cement structure. In the self-repairing concrete structure, stress causes the micro-capsules to fracture, and the capsule cores released are capable of flowing to the fracture surface due to an effect of capillary siphon, thus the capsule cores contact the solidifying agent and have polymerization reaction therein, forming repairing fracture surface of enough high strength in order to achieve the purpose of repairing the concrete.

Embodiment 5: Technology of fabricating concrete material with self-repairing function by using carbamide resin polymer micro-capsules. 38.0 grams of water are weighed, and 5.0g of micro-capsules are added, then the mixture is stirred until the micro-capsules are fully dispersed. The mixture is put into a mixing container, and 60.0g of cement, 20.0g of sandstone, 10g of phosphorous slag powder and 10g of coal ash are added. Then operations of stirring, vibrating, and work piece irrigating are performed. After one hour of being put aside, the mold is formed. After mold overflow of concrete slurry was scraped, the mold is put aside 24 hours. Then after the mold has been removed the sample is transferred into the conservation container for 28 days.

Embodiment 6: Method for fabricating self-repairing concrete using carbamide resin polymer micro-capsules.
(1) Weighing a sufficient dose of water, adding in a proper portion of carbamide resin polymer micro-capsules, then stirring until fully dispersed;
(2) Pouring the above mixture to a mixing container, adding in corresponding dose of concrete;
(3) Slower stirring the concrete (300 rpm), and then faster stirring (800 rpm);
(4) Gradually adding concrete slurry, each time at 1/3 (one third) of total dose, vibrating and removing bubbles until all of concrete slurry has been added to fill in the mixing container.
(5) Putting the above mixture aside for one hour, scraping the concrete slurry overflowed from the mold, then laying aside for 24 hours;
(6) Removing the mold and then transferring the sample to conservation container for 28 days.

During the process of mixing, solidifying and curing of the concrete material, the micro-capsules have no fracture. The self-repairing concrete using polymer micro-capsules has good process operability, self-repairing repeatability, and industrial application possibility.

It is to be understood, however, that even though numerous characteristics and advantages of exemplary and preferred embodiments have been set out in the foregoing description, together with details of the structures and functions of the embodiments, the disclosure is illustrative only, and changes may be made in detail, especially in matters of shape, size, and arrangement of parts within the scope of the appended claims.

## Claims

1. A self-repairing concrete comprising: a mixture of concrete, carbamide resin polymer micro-capsules and water, wherein the mass ratio of said concrete, micro-capsules and water is 100 : 1-15 : 15 - 50, wherein the micro-capsules are ball-shaped with a diameter of 10 - 500 microns and comprise a capsule wall and a capsule core, wherein
(i) the capsule wall is made from carbamide resin polymer and has a thickness of 1 - 10 microns, and
(ii) the capsule core is an adhesive material, wherein the adhesive is a single component adhesive selected from the group consisting of single-component polyurethane adhesives, silicone anaerobic adhesives, acrylic adhesives, and neoprene adhesives or is a multi-component epoxy adhesive;
wherein the mass ratio of the polymer material of the capsule wall and the adhesive material of the capsule core of the micro-capsules is 100 : 40 - 80.

2. The self-repairing concrete as claimed in claim 1, wherein the multi-component epoxy adhesive consists of one or more of bisphenol A type epoxy resin, bisphenol F type epoxy resin, bisphenol S type epoxy resin, resorcinol-type epoxy resin, silicone modified bisphenol A type epoxy resin or organic titanium modified bisphenol A type epoxy resin.

3. The self-repairing concrete as claimed in claim 1 or 2, wherein the micro-capsules are pre-mixed with 0.1 - 0.5 % hydrophilic surface active agent and are evenly distributed in said concrete, wherein said hydrophilic surface active agent comprises one or more of alkylbenzene sulfonate, polyoxyethylene, poly- or multi-hydroxy compounds, and glycidyl compounds.

4. The self-repairing concrete as claimed in claim 3, wherein said micro-capsules comprise 8-25% diluent, said diluent comprising epoxy that is capable of improving liquidity of the epoxy resin and performing reaction with the epoxy resin and solidifying agent.

5. The self-repairing concrete as claimed in claim 4, wherein said solidifying agent is a low-temperature reactive type, comprising one or more of straight-chain aliphatic polyamine, polyamide, aliphatic polyamines, aromatic amines, modified polyamine, poly-mercaptan, urea derivatives, imidazole derivatives and organic farmers derivatives, wherein the mass ratio of said solidifying agent and said epoxy resin is 12 - 35%.

6. A method for fabricating a self-repairing concrete comprising the steps of:
(1) Weighing a sufficient dose of water, adding in a proper portion of carbamide resin polymer micro-capsules, then stirring until said micro-capsules are fully dispersed in said water, wherein the mirco-capsules are ball-shaped with a diameter of 10 - 500 microns and comprise a capsule wall and a capsule core, wherein
(i) the capsule wall is made from carbamide resin polymer and has a thickness of 1 - 10 microns, and
(ii) the capsule core is an adhesive material, wherein the adhesive is a single component adhesive selected from the group consisting of single-component polyurethane adhesives, silicone anaerobic adhesives, acrylic adhesives, or neoprene adhesives or is a multi-component epoxy adhesive;
wherein the mass ratio of the polymer material of the capsule wall and the adhesive material of the capsule core of the micro-capsules is 100 : 40 - 80;
(2) Poring the above mixture into a mixing container, adding a corresponding dose of cement to said mixture;
(3) Slower stirring the mixture with cement and then faster stirring to form a concrete slurry; and
(4) Gradually adding said concrete slurry into a mixing container, each time at 1/3 of total dose, vibrating and removing bubbles until all said concrete slurry has been added to fill in said mixing container.

7. A method for fabricating a self-repairing concrete comprising the steps of:
(1) Weighing a sufficient dose of water, adding a proper portion of carbamide resin polymer micro-capsules into said water, then stirring until said micro-capsules are fully dispersed in said water, wherein the micro-capsules are ball-shaped with a diameter of 10 - 500 microns and comprise a capsule wall and a capsule core, wherein
(i) the capsule wall is made from carbamide resin polymer and has a thickness of 1 - 10 microns, and
(ii) the capsule core is an adhesive material, wherein the adhesive is a single component adhesive selected from the group consisting of single-component polyurethane adhesives, silicone anaerobic adhesives, acrylic adhesives, or neoprene adhesives or is a multi-component epoxy adhesive;
wherein the mass ratio of the polymer material of the capsule wall and the adhesive material of the capsule core of the micro-capsules is 100 : 40 - 80;
(2) Poring the above mixture into a mixing container, adding in corresponding dose of cement into said mixture;
(3) Slower stirring said mixture with cement, and then faster stirring to form a concrete mixture;
(4) Vibrating the concrete mixture and then gradually or step by step irrigating work pieces in molds;
(5) Putting the above mixture aside for 1-2 hours, scraping the concrete slurry overflowed from the molds, then placing aside for 21-26 hours; and
(6) Removing said work-pieces from the molds and then transferring the work-pieces to a conservation container for 25-31 days to form said self-repairing concrete.

## Patentansprüche

1. Ein selbstreparierender Beton, umfassend: eine Mischung aus Beton, Carbamidharzpolymer-Mikrokapseln und Wasser, wobei das Massenverhältnis von Beton, Mikrokapseln und Wasser 100 : 1 - 15 : 15 - 50 beträgt, wobei die Mikrokapseln kugelförmig mit einem Durchmesser von 10 - 500 Mikron sind und eine Kapselwand und einen Kapselkern umfassen, wobei
(i) die Kapselwand aus Carbamidharzpolymer hergestellt ist und eine Dicke von 1 - 10 Mikron aufweist und
(ii) der Kapselkern ein Klebstoffmaterial ist, wobei der Klebstoff ein Einkomponenten-Klebstoff, ausgewählt aus der Gruppe bestehend aus Einkomponenten-Polyurethanklebstoffen, anaeroben Siliconklebstoffen, Acrylklebstoffen und Neoprenklebstoffen, oder ein Mehrkomponenten-Epoxidklebstoff ist;
wobei das Massenverhältnis des Polymermaterials der Kapselwand und des Klebstoffmaterials des Kapselkerns der Mikrokapseln 100 : 40 - 80 beträgt.

2. Der selbstreparierende Beton nach Anspruch 1, wobei der Mehrkomponenten-Epoxidklebstoff aus einem oder mehreren aus Epoxidharz vom Bisphenol A-Typ, Epoxidharz vom Bisphenol F-Typ, Epoxidharz vom Bisphenol S-Typ, Epoxidharz vom Resorcinol-Typ, silikonmodifiertem Epoxidharz vom Bisphenol A-Typ oder Epoxidharz vom Bisphenol A-Typ, das mit organischem Titan modifiziert ist, besteht.

3. Der selbstreparierende Beton nach Anspruch 1 oder 2, wobei die Mikrokapseln mit 0,1 - 0,5% hydrophilem grenzflächenaktivem Mittel vorgemischt sind und gleichmäßig in dem Beton verteilt sind, wobei das hydrophile grenzflächenaktive Mittel eines oder mehrere aus Alkylbenzolsulfonat, Polyoxyethylen, Poly- oder Multihydroxyverbindungen und Glycidylverbindungen umfasst.

4. Der selbstreparierende Beton nach Anspruch 3, wobei die Mikrokapseln 8 - 25% Verdünnungsmittel umfassen, wobei das Verdünnungsmittel Epoxid umfasst, das in der Lage ist, die Fließfähigkeit des Epoxidharzes zu verbessern und eine Reaktion mit dem Epoxidharz und Verfestigungsmittel einzugehen.

5. Der selbstreparierende Beton nach Anspruch 4, wobei das Verfestigungsmittel ein Typ ist, der bei niedriger Temperatur reaktiv ist, das eines oder mehrere aus geradkettigem aliphatischem Polyamin, Polyamid, aliphatischen Polyaminen, aromatischen Aminen, modifiziertem Polyamin, Polymercaptan, Harnstoffderivaten, Imidazolderivaten und organischen landwirtschaftlichen Derivaten umfasst, wobei das Massenverhältnis des Verfestigungsmittels und des Epoxidharzes 12 - 35% beträgt.

6. Ein Verfahren zur Herstellung eines selbstreparierenden Betons, umfassend die Schritte:
(1) Abwiegen einer ausreichenden Dosis Wasser, Zugabe einer angemessenen Portion Carbamidharzpolymer-Mikrokapseln, dann Rühren, bis die Mikrokapseln vollständig in dem Wasser dispergiert sind, wobei die Mikrokapseln kugelförmig mit einem Durchmesser von 10 - 500 Mikron sind und eine Kapselwand und einen Kapselkern umfassen, wobei
(i) die Kapselwand aus Carbamidharzpolymer hergestellt ist und eine Dicke von 1 - 10 Mikron aufweist und
(ii) der Kapselkern ein Klebstoffmaterial ist, wobei der Klebstoff ein Einkomponenten-Klebstoff, ausgewählt aus der Gruppe bestehend aus Einkomponenten-Polyurethanklebstoffen, anaeroben Siliconklebstoffen, Acrylklebstoffen oder Neoprenklebstoffen, oder ein Mehrkomponenten-Epoxidklebstoff ist;
wobei das Massenverhältnis des Polymermaterials der Kapselwand und des Klebstoffmaterials des Kapselkerns der Mikrokapseln 100 : 40 - 80 beträgt;
(2) Gießen der vorstehenden Mischung in einen Mischbehälter, Zugabe einer entsprechenden Dosis Zement zu der Mischung;
(3) langsameres Rühren der Mischung mit Zement und dann schnelleres Rühren, um einen Betonslurry zu bilden; und
(4) allmähliche Zugabe des Betonslurry zu einem Mischbehälter, jedes Mal zu 1/3 der Gesamtdosis, Vibrieren und Entfernen von Blasen, bis der gesamte Betonslurry zugegeben wurde, um den Mischbehälter zu füllen.

7. Ein Verfahren zur Herstellung eines selbstreparierenden Betons, umfassend die Schritte:
(1) Abwiegen einer ausreichenden Dosis Wasser, Zugabe einer angemessenen Portion Carbamidharzpolymer-Mikrokapseln zu dem Wasser, dann Rühren, bis die Mikrokapseln vollständig in dem Wasser dispergiert sind, wobei die Mikrokapseln kugelförmig mit einem Durchmesser von 10 - 500 Mikron sind und eine Kapselwand und einen Kapselkern umfassen, wobei
(i) die Kapselwand aus Carbamidharzpolymer hergestellt ist und eine Dicke von 1 - 10 Mikron aufweist und
(ii) der Kapselkern ein Klebstoffmaterial ist, wobei der Klebstoff ein Einkomponenten-Klebstoff, ausgewählt aus der Gruppe bestehend aus Einkomponenten-Polyurethanklebstoffen, anaeroben Siliconklebstoffen, Acrylklebstoffen oder Neoprenklebstoffen, oder ein Mehrkomponenten-Epoxidklebstoff ist;
wobei das Massenverhältnis des Polymermaterials der Kapselwand und des Klebstoffmaterials des Kapselkerns der Mikrokapseln 100 : 40 - 80 beträgt;
(2) Gießen der vorstehenden Mischung in einen Mischbehälter, Zugabe einer entsprechenden Dosis Zement zu der Mischung;
(3) langsameres Rühren der Mischung mit Zement und dann schnelleres Rühren, um eine Betonmischung zu bilden;
(4) Vibrieren der Betonmischung und dann allmähliches oder schrittweises Behandeln der Werkstücke in Formen mit Wasser;
(5) Beiseitestellen der vorstehenden Mischung für 1-2 Stunden, Abkratzen des aus den Formen übergelaufenen Betonslurry, dann Beiseitestellen für 21-26 Stunden; und
(6) Entnahme der Werkstücke aus den Formen und dann Überführen der Werkstücke in einen Aufbewahrungsbehälter für 25-31 Tage, um den selbstreparierenden Beton zu bilden.

## Revendications

1. Béton autoréparable comprenant : un mélange de béton, de microcapsules de polymère de résine de carbamide et d'eau, dans lequel le rapport en poids desdits béton, microcapsules et eau est de 100 : 1 - 15 : 15 - 50, dans lequel les microcapsules ont la forme de billes ayant un diamètre de 10 à 500 µm et comprennent une paroi de capsule et un noyau de capsule, dans lequel
(i) la paroi de capsule est faite à partir d'un polymère de résine de carbamide et a une épaisseur de 1 à 10 µm, et
(ii) le noyau de capsule est une matière adhésive, dans lequel l'adhésif est un adhésif à composant unique choisi dans le groupe constitué par les adhésifs de polyuréthane à composant unique, les adhésifs anaérobies de silicone, les adhésifs acryliques et les adhésifs de néoprène ou est un adhésif époxy à plusieurs composants ;
dans lequel le rapport en poids de la matière polymère de la paroi de capsule et de la matière adhésive du noyau de capsule des microcapsules est de 100 : 40 - 80.

2. Béton autoréparable selon la revendication 1, dans lequel l'adhésif époxy à plusieurs composants se compose d'une ou plusieurs résine époxy de type bisphénol A, résine époxy de type bisphénol F, résine époxy de type bisphénol S, résine époxy de type résorcinol, résine époxy de type bisphénol A modifiée par une silicone ou résine époxy de type bisphénol A modifiée par du titane organique.

3. Béton autoréparable selon la revendication 1 ou 2, dans lequel les microcapsules sont prémélangées avec de 0,1 à 0,5 % de tensioactif hydrophile et sont distribuées de manière homogène dans ledit béton, dans lequel ledit tensioactif hydrophile comprend un ou plusieurs d'un sulfonate d'alkylbenzène, d'un polyoxyéthylène, de composés poly ou multi-hydroxy et de composés glycidyliques.

4. Béton autoréparable selon la revendication 3, dans lequel lesdites microcapsules comprennent de 8 à 25 % de diluant, ledit diluant comprenant un époxy qui est capable d'améliorer le caractère liquide de la résine époxy et de réaliser une réaction entre la résine époxy et l'agent de solidification.

5. Béton autoréparable selon la revendication 4, dans lequel ledit agent de solidification est de type réactif à basse température, comprenant un ou plusieurs d'une polyamine aliphatique à chaîne linéaire, d'un polyamide, de polyamines aliphatiques, d'amines aromatiques, d'une polyamine modifiée, d'un polymercaptan, de dérivés de l'urée, de dérivés de l'imidazole et de dérivés de l'agriculture biologique, dans lequel le rapport en poids dudit agent de solidification et de ladite résine époxy est de 12 à 35 %.

6. Méthode de fabrication d'un béton autoréparable comprenant les étapes consistant à:
(1) peser une dose suffisante d'eau, ajouter une partie appropriée de microcapsules de polymère de résine de carbamide, puis agiter jusqu'à ce que lesdites microcapsules soient totalement dispersées dans ladite eau, dans lequel les microcapsules ont la forme de billes ayant un diamètre de 10 à 500 µm et comprennent une paroi de capsule et un noyau de capsule, dans lequel
(i) la paroi de capsule est faite à partir d'un polymère de résine de carbamide et a une épaisseur de 1 à 10 µm, et
(ii) le noyau de capsule est une matière adhésive, dans lequel l'adhésif est un adhésif à composant unique choisi dans le groupe constitué par les adhésifs de polyuréthane à composant unique, les adhésifs anaérobies de silicone, les adhésifs acryliques ou les adhésifs de néoprène ou est un adhésif époxy à plusieurs composants ;
dans lequel le rapport en poids de la matière polymère de la paroi de capsule et de la matière adhésive du noyau de capsule des microcapsules est de 100:40 à 80 ;
(2) verser le mélange ci-dessus dans un récipient de mélange, ajouter une dose correspondante de ciment audit mélange ;
(3) agiter plus lentement le mélange avec le ciment et ensuite l'agiter plus rapidement pour former une suspension de béton ; et
(4) ajouter graduellement ladite suspension de béton dans un récipient de mélange, chaque fois à 1/3 de la dose totale, faire vibrer et éliminer les bulles jusqu'à ce que toute ladite suspension de béton ait été ajoutée pour remplir ledit récipient de mélange.

7. Méthode de fabrication d'un béton autoréparable comprenant les étapes consistant à:
(1) peser une dose suffisante d'eau, ajouter une partie appropriée de microcapsules de polymère de résine de carbamide dans ladite eau, puis agiter jusqu'à ce que lesdites microcapsules soient totalement dispersées dans ladite eau, dans lequel les microcapsules ont la forme de billes ayant un diamètre de 10 à 500 µm et comprennent une paroi de capsule et un noyau de capsule, dans lequel
(i) la paroi de capsule est faite à partir d'un polymère de résine de carbamide et a une épaisseur de 1 à 10 µm, et
(ii) le noyau de capsule est une matière adhésive, dans lequel l'adhésif est un adhésif à composant unique choisi dans le groupe constitué par les adhésifs de polyuréthane à composant unique, les adhésifs anaérobies de silicone, les adhésifs acryliques ou les adhésifs de néoprène ou est un adhésif époxy à plusieurs composants ;
dans lequel le rapport en poids de la matière polymère de la paroi de capsule et de la matière adhésive du noyau de capsule des microcapsules est de 100 : 40 à 80 ;
(2) verser le mélange ci-dessus dans un récipient de mélange, ajouter une dose correspondante de ciment audit mélange ;
(3) agiter plus lentement ledit mélange avec le ciment et ensuite l'agiter plus rapidement pour former un mélange de béton ;
(4) faire vibrer le mélange de béton puis irriguer graduellement ou étape par étape les pièces à travailler dans des moules ;
(5) laisser reposer le mélange ci-dessus pendant 1 à 2 heures, retirer la suspension de béton ayant débordé des moules, puis les mettre de côté pendant 21 à 26 heures ; et
(6) retirer lesdites pièces à travailler des moules et les transférer vers un récipient de conservation pendant 25 à 31 jours afin de former ledit béton autoréparable.
